# EUROPEAN PATENT APPLICATION

(11) **EP 2 824 630 A1**
(43) Date of publication of application: **14.01.2015**
(21) Application number: 14174589.3
(22) Date of filing: 26.06.2014
(51) Int. Cl.: G06Q 30/02

(54) **Systems and methods for obtaining user feedback to media content**

(30) Priority: 11.07.2013 US 201361845313 P; 11.02.2014 US 201414178233; 12.05.2014 KR 20140056759
(71) Applicant: Samsung Electronics Co., Ltd, Gyeonggi-do 443-742 (KR)
(72) Inventor: Chen, Guangshun Gary, Saratoga, CA 95070 (US); Guo, Shengbo, San Jose, CA 95134 (US); Miller, Jeff, Pismo Beach, CA 93449 (US)
(74) Representative: HGF Limited

(57) **Abstract**

Techniques for obtaining user feedback related to media content are provided. Sensor data including motion data captured by a motion sensor while media content is played on a media content terminal device may be received. The sensor data may be analyzed for an indication of one or more personal states of one or more users. The indication of a first personal state may be determined based on the motion data. User preferences may be derived from the user feedback. For example, parts of the media content (e.g., specific video frames or scenes) may be analyzed and various entities or features extracted. The entities or features may be matched against user feedback to derive user preferences at a more granular level.

## Description

### PRIORITY

This application claims priorities to U.S. Provisional Application No. 61/845,313, filed on July 11, 2013, and U.S. Patent Application No. 14/178,233, filed on February 11, 2014, and Korean Patent Application No. 10-2014-0056759, filed on May 12, 2014, and titled "Ubiquitous User Feedback From Device Sensors During Media Consumption" which is incorporated by reference herein in its entirety.

### FIELD OF THE INVENTION

The present disclosure relates to the field of media content consumption and, in particular, obtaining user feedback related to media content.

### BACKGROUND

Traditional methods of obtaining user feedback to media content, such as movies or television (TV) shows, may include asking or requiring a user to provide the user feedback after watching or otherwise experiencing the media content. For example, some media content providers can learn whether a user likes or dislikes particular media content by relying on the user to provide explicit ratings about the media content. Content providers may expressly ask a user a list of questions about the characteristics of the media content (e.g., a movie) that the user enjoys the most.

Traditional methods of collecting user feedback on media content can be extremely limited. Many users ignore such requests to provide user feedback to media content as it can be time consuming and can reduce user experience with the media content. Such user ratings often are not granular and may lack a level of information detail that is desirable. Furthermore, the user feedback collected in the traditional manner may represent only a small subset of users who actually choose to share user feedback. These users may tend to share certain common characteristics or be representative only in certain, narrow customer segments. The content providers may not have user feedback from the majority of users that are consuming the content. The user feedback may be provided in a delayed manner that occurs after the media content is consumed. The user feedback may not accurately represent the user's true contemporaneous feelings about media content, since the user's feelings may change over time.

The fact that a user has consumed media content may not reflect substantive user feedback about the media content. For example, the fact that a user played a movie does not mean that the user liked the movie, or that the user even watched the movie. In some cases, the user may simply have the TV on without paying attention to the media content while the attention of the user is engaged elsewhere.

For the foregoing reasons, it is desirable to obtain user feedback from all users and in a way that is continuous but not intrusive to users, such that the user feedback does not rely on users to actively choose to provide feedback on their own after the media content has been consumed. Furthermore, it is desirable to obtain user feedback during the consumption of the media content, rather than delayed until after the consumption of the media content. It is also desirable to obtain user feedback that provides more granular information than only a user's overall rating of the movie as a whole. Furthermore, it is desirable to obtain a wider variety of user feedback that may be more indicative of the user's true feelings or emotions about the media content.

### SUMMARY

To obtain user feedback related to media content, computer implemented methods, systems, and computer readable media, in an embodiment, may receive sensor data including motion data captured by a motion sensor while media content is played on a media content terminal device. The sensor data may be analyzed for an indication of one or more personal states of one or more users. The indication of a first personal state may be determined based on the motion data.

In an embodiment, the first personal state may be associated with user attention on an activity other than consumption of the media content.

In an embodiment, the first personal state may be associated with user emotion in response to the media content.

In an embodiment, the sensor data may include image data captured by a camera. The determining of an indication of a first personal state may be further based on the image data.

In an embodiment, the sensor data may include audio data captured by a microphone. The determining of an indication of a first personal state may be further based on the audio data.

In an embodiment, personalized media content based on the one or more personal states may be provided to the one or more users.

In an embodiment, the providing personalized media content may include dynamically changing the media content while the media content is being played.

In an embodiment, the providing personalized media content may include changing the media content for a target audience based on the one or more personal states of the one or more users separate from the target audience.

In an embodiment, a part of the media content is identified. The part of the media content corresponds in time with when the first personal state occurs while the media content is consumed. The part of the media content is mapped to the first personal state.

In an embodiment, the identifying of the part of the media content and the mapping of the part of the media content are performed in real time while the media content is consumed.

In an embodiment, parts of the media content (e.g., specific video frames or scenes) may be analyzed and various entities or features extracted. The entities or features may be matched against user feedback to derive user preferences at a more granular level.

Many other features and embodiments of the invention will be apparent from the accompanying drawings and from the following detailed description.

### BRIEF DESCRIPTION OF THE DRAWINGS

FIGURE 1A illustrates a block diagram of an example user feedback system, according to an embodiment.
FIGURE 1B illustrates a block diagram of an example user feedback system, according to an embodiment.
FIGURE 2 illustrates a block diagram of an example user feedback system, according to an embodiment.
FIGURE 3 illustrates a flowchart for an example method of obtaining user feedback related to media content, according to an embodiment.
FIGURE 4 illustrates an example of a computer system, according to an embodiment.

The figures depict various embodiments of the present invention for purposes of illustration only, wherein the figures use like reference numerals to identify like elements. One skilled in the art will readily recognize from the following discussion that alternative embodiments of the structures and methods illustrated in the figures may be employed without departing from the principles of the invention described herein.

### DETAILED DESCRIPTION

Systems and methods for obtaining user feedback to media content are provided in the present disclosure. The media content may include any type of content, including, for example, audio, images, video, etc. For example, the media content may include a movie, film, TV, sporting event, concert, advertisement (or commercial), video game, etc. In an embodiment, the media content may be strictly audio content, such as streaming music or radio, an audio book, an audio presentation, an audio sports broadcast, an audio advertisement, etc. The media content may be played (or presented) on a media content terminal device. The media content terminal device may include a device or system which presents the media content to the user for consumption. Consumption by the user may include, for example, watching or listening to the media content. The media content terminal device may include a mechanism or system for consuming the media content, such as a display for the user to watch the media content or a speaker for the user to listen to the media content. The media content terminal device may include, for example, a smart television (TV), desktop computer, laptop, tablet, smartphone, gaming device, etc.

Systems and methods provided herein may include one or more sensors (e.g., microphone, camera, motion sensor) that may be used to obtain various sensor data (e.g., audio data, image data, motion data) while the media content is being played on the media content terminal device. The sensor data may include audio from the user, images of the user, or motions by the user during the playing of the media content. The sensor data may, for example, capture or reflect a user's visual expression (e.g., facial expression), a user's appearance (e.g., posture), a user's audible expression (e.g., words, sounds), or a user's actions (e.g., presence in the area where the media content is being played, gestures, posture) during the playing of the media content. Likewise, the sensor data may, for example, capture or reflect the absence of audio from the user, images of the user, or motions by the user.

A user's personal state with respect to the media content may be determined based on the sensor data. The user's personal state may include, for example, the user's emotions, feelings, mood, sentiment, state of attention or interest, state of approval, etc., with respect to the media content. The sensor data may provide cues to the user's personal state, etc. For example, a frowning expression may indicate that the user finds the media content sad or unsatisfactory, while a laughing expression may indicate that the user finds the media content funny or ridiculous. A user's action may indicate a user's attention and interest in the media content. For example, a user performing another activity (e.g., reading a book or tablet, cleaning house) other than consuming the media content may indicate a user's attention is not on the media content and that the user has a low level of interest in the media content. Similarly, a user's absence during a significant duration of the media content may indicate that the user has a low level of interest in the media content. It should be appreciated that the audio data, the image data, and the motion data may be used alone, or in combination, to determine a user's personal state. These and other expressions, actions, and absences may signify identical, similar, or dissimilar personal states of a user in relation to the media content.

The user's personal state may be associated with the media content as a whole (e.g., the entire movie), or with a specific part of the media content (e.g., a scene within the movie, one or more video frames of the media content, etc.) corresponding to a time when the user's personal state occurs. For example, a user's laughter during a specific scene in a movie may indicate that the user finds the specific scene of the movie funny. A user's frequent absence, or extended absence, while the media content is being played may indicate that the user has a low level of interest in the media content as a whole. However, despite a frequent absence or an extended absence, a user's presence while certain portions of the media content are being played may indicate that the user nonetheless finds the certain portions entertaining.

It should also be appreciated that one personal state may indicate another personal state. For example, a user's emotion of happiness may indicate that the user approves of the media content. A user's state of agitation may indicate that the user disapproves of the media content.

The user's personal state may be provided as user feedback with respect to the media content. The user's personal state may be associated with various attributes of the media content, such as the media content as a whole (e.g., a movie), a specific part of the media content (e.g., scene, chapter) in which the user feedback occurred, information related to the media content (e.g., genre of a movie, theme of a scene, actors or actresses in a scene), etc. The user's personal state may be associated with features, entities, categories, or classifications of a scene or the media content. The sensor data and the user's personal state may include markers, timestamps, or other means to associate (e.g., map) the sensor data and the user's personal state with a corresponding part of the media content. The user's personal state may be associated with (e.g., mapped to) a user profile for the user. In an embodiment, specific video frames or scenes of the media content may be analyzed and entities or features extracted. The entities or features may thereafter be matched against user feedback to derive user preferences at a more granular level.

The sensor data may reflect information about one or more users. More than one personal state for a user may be determined based on the sensor data. Furthermore, personal states for many users may be determined based on the sensor data and provided as user feedback for the users.

User characteristics with respect to media content may be determined based on the user's personal states. User characteristics may include, for example, a user's interests, preferences, habits, patterns, etc. For example, it may be determined that a user likes science fiction movies, dislikes horror films, prefers comedies by a specific actor, etc. This information may be used by media content providers or media content producers to personalize media content specific to the user, or to users with similar user characteristics. Individual user characteristics for a group of users may be aggregated to form collective user characteristics for the entire group of users. Personalized media content may then be provided to the group of users, or to another group of users with similar collective user characteristics. The term "media content producer" is used broadly herein and may include any individual or entity involved in the creation, formation, or alteration of the media content, such as creating, directing, or editing of the media content.

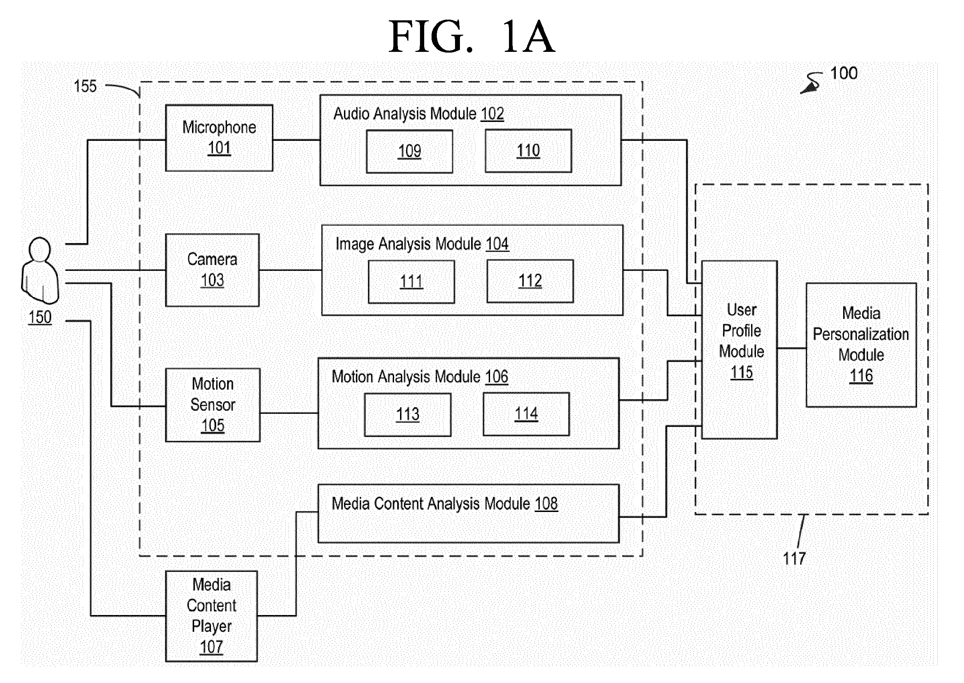

**FIGURE 1A** illustrates a block diagram of an example of a user feedback system 100, according to an embodiment. The user feedback system 100 may include a microphone 101 communicatively coupled to an audio analysis module 102, a camera 103 communicatively coupled to an image analysis module 104, a motion sensor 105 communicatively coupled to a motion analysis module 106, and a media content player 107 communicatively coupled to a media content analysis module 108.

In the embodiment shown, the microphone 101, the audio analysis module 102, the camera 103, the image analysis module 104, the motion sensor 105, the motion analysis module 106, and the media content analysis module 108 are included within a media content terminal device 155, such as a smart TV, desktop computer, laptop, tablet, smartphone, gaming device, etc. The components illustrated are not intended to be limiting, and that, to avoid obscuring details of the present disclosure, other components of the media content terminal device 155 may not be illustrated-e.g., display, speaker, communication port, transceiver, processing device, memory, etc.

In other embodiments, the media content terminal device 155 may include a different combination of the functional blocks shown in FIGURE 1A. For example, in other embodiments, one or more of the microphone 101, the audio analysis module 102, the camera 103, the image analysis module 104, the motion sensor 105, the motion analysis module 106, and the media content analysis module 108 may not be included within the media content terminal device 155. Furthermore, in other embodiments, one or more of the media content player 107, the user profile module 115, and the media personalization module 116 may be included within the media content terminal device 155. For example, in another embodiment, the media content terminal device 155 shown in FIGURE 1A may also include the media content player 107.

Any variety of microphones, cameras, and motion sensors may be implemented. For example, the camera 103 may include active pixel sensor (APS) or passive pixel sensors (PPS). The motions sensor 105 may include, for example, infrared or optical detectors. In an embodiment, the motion sensor 105 may include, or work in conjunction with, for example, an accelerometer or gyroscope.

The microphone 101 may capture (or detect) audio. The detected audio may include the voice (or conversation) of one or more users 150 consuming the media content being played on the media content terminal device 155, as represented by the line from the users 150 to the microphone 101. The captured audio is provided to the audio analysis module 102 as audio data, as represented by the line from the microphone 101 to the audio analysis module 102. The audio analysis module 102 may receive and analyze the audio data to determine a user's personal state with respect to the media content.

The audio analysis module 102 may include a speech recognition module 109 and a classifier module 110. The speech recognition module 109 may detect whether the audio data includes human speech. Any human speech that is detected may be translated into text. The classifier module 110 may classify text that is determined to be relevant to the media content being played. For example, the classifier module 110 may categorize the text and extract various concepts and entities to determine whether the text is relevant to the media content. If the classifier module 110 does not find sufficient relevancy to the media content, the text for the speech may be discarded as irrelevant. If text is found to be relevant, the text may be further classified with more specificity. For example, the text may be further classified as relevant to a specific scene being played in the media at the corresponding time of the associated speech, or to the media content as a whole. The speech recognition module 109 and the classifier module 110 may include one or more speech or natural language databases (not shown). These databases may be used to recognize speech, to compare user sounds or words, etc. The speech database may be located in various locations in different embodiments. For example, the speech database may be located on the media content player 107, or on a remote device such as a server of the content provider.

The audio analysis module 102 may also analyze the audio data for audible cues (e.g., sounds, speech) that may indicate the user's personal state with respect to the media content. For example, human speech carries various kinds of information that may indicate emotion. For example, non-speech sounds or speech may carry cues to an underlying emotional state of the user speaking, which may be encoded on an acoustic level. Features may be extracted from the non-speech sounds and speech, and classifiers (e.g., Gaussian mixture models) may be implemented for emotion detection.

The audio analysis module 102 may identify words or sounds in the audio data that may be associated with a user's personal state. For example, approval may be indicated by the user uttering specific words or non-speech sounds such as "yes" or "uh-huh" or by the user cheering or clapping. Disapproval may be indicated by the user uttering specific words or non-speech sounds such as "no" or "booing". In an embodiment, a specific word or phrase may be programmed to indicate approval or disapproval, such as the user saying "I like this" or "I don't like this", respectively. Other words and sounds may also indicate various emotions. For example, a scream or gasp may indicate that the user is scared, and a laugh may indicate that the user found the media content funny.

The camera 103 may capture one or more images while the media content is being played. In an embodiment, the camera 103 may include a camera that captures photographs. The camera 103 may, for instance, take a photograph periodically, such as every minute, 5 minutes, 10 minutes, or any other time suitable period. The camera 103 may, for instance, also take a photograph non-periodically. For example, the camera 103 may take more photographs when the user is in motion or when the media content being played reflects a high level of activity. In another embodiment, the camera 103 may include a video camera that captures a set of images as video. The captured images may be provided to the image analysis module 104 as image data. The image analysis module 104 may analyze the image data to determine a user's personal state with respect to the media content.

The image analysis module 104 may include a facial feature extraction module 111 that analyzes the image data and extracts facial features to determine a user's personal state. The image analysis module 104 may include a facial recognition module 112 that analyzes the facial features extracted from the image data. The facial recognition module 112 may analyze facial features within the image data to identify facial expressions and to determine a user's personal state. For instance, facial expressions may be analyzed to determine a user's emotion, such as whether the user is excited, horrified, scared, sad, angry, etc. The facial recognition module 112 may also analyze the facial features within an image data to identify one or more users within the image data. For instance, the facial features may be compared to a database of faces or facial features associated with various user profiles. The facial feature extraction module 111 and the facial recognition module 112 may include one or more facial or feature recognition databases (not shown). These databases may be used to recognize features and faces of different users. The databases may be located in various locations in different embodiments. For example, the databases may be located on the media content player 107, or on a remote device such as a server of the content provider.

The image analysis module 104 may also analyze the image data to determine a user's action. While the image data may relate to a photograph, a user's action may still be determined from the photograph. For example, a user's gesture (e.g., giving a thumbs up or down) or posture may be captured in an image. What the user is doing (e.g., walking around, reading a book or tablet, cleaning house, etc.) may also be determined from the photograph. A user's action may also include a user's presence or absence while the media content is being played. For example, the image analysis module 104 may analyze the image to determine whether one or more users are present, whether any users left the room while the media content was being played, how long and when users were present or absent, etc.

The image analysis module 104 may analyze the image data for the user's actions to determine the user's personal state. For example, a user's actions may indicate a level of interest of the user in the media content. If a user is performing another activity (e.g., walking around, reading a book or tablet, cleaning the house, etc.) while the media content is being played, then it may be determined that the user is experiencing the media content as an ancillary activity and that the user has a low level of interest in the media content.

The user's action may indicate a user's approval or disapproval of the media content. For example, image data reflecting a user giving one or two thumbs up may indicate that the user likes or approves of the media content or corresponding part of the media content. Image data reflecting a user giving one or two thumbs down may indicate that the user dislikes or disapproves of the media content or corresponding part of the media content. In an embodiment, one or more user actions may be associated with or otherwise indicative of the user's approval or disapproval of the media content.

The user's actions may indicate an emotion of the user. For example, image data reflecting a user covering her eyes may indicate that a user is scared. Image data reflecting a user having one or both arms in the air may indicate that the user is excited or happy. Other actions may also be identified in the image data and may indicate one or more emotions.

The motion sensor 105 may capture motions. The motions may include motion by one or more users in the area in which the media content is being played, as represented by the line from the users 150 to the motion sensor 105. The captured motion may be provided to the motion analysis module 106 as motion data, as represented by the line from the motion sensor 105 to the motion analysis module 106. The motion analysis module 106 may analyze the motion data to determine a user's personal state with respect to the media content.

The motion analysis module 106 may include a motion feature extraction module 113 that identifies and extracts user motions from the motion data. The motion analysis module 106 may include a motion recognition module 114 that analyzes the user motions for user actions (e.g., gestures, postures, activities) performed by the user. A user's actions may indicate the user's personal state, such as a level of interest in the media content. If a user is performing another activity (e.g., talking on the phone, typing on a writing device, preparing food, etc.) while the media content is being played, then it may be determined that the user is experiencing the media content as an ancillary activity and that the user has a low level of interest in the media content. Furthermore, the amount of time that the user is performing another activity may be computed based on the motion data. It may be determined that the user has a low level of interest in the media content when the user performs another activity during the playing of the media content for long periods of time. As discussed above, the user's action may indicate approval or disapproval of the media content. As discussed above, in an embodiment, one or more user actions may be associated with or otherwise indicative of approval or disapproval of media content. The motion feature extraction module 113 and the motion recognition module 114 may include one or more motion recognition databases (not shown). These databases may be used to recognize the various motions of different users. The databases may be located in various locations in different embodiments. For example, the databases may be located on the media content player 107, or on a remote device such as a server of the content provider.

The user's actions may indicate emotions of the user during the playing of the media content. For example, the motion of a user clapping, or raising one or both arms in the air, may indicate that the user is excited or happy with the media content or corresponding part of the media content. The motion of a user shaking her head, or giving one or two thumbs down, may indicate that the user dislikes or disapproves of the media content or corresponding part of the media content. The motion of a user covering her eyes may indicate that a user is scared. Other actions identified by the motion data may also indicate one or more emotions.

The microphone 101, the camera 103, and the motion sensor 105 may be oriented in various positions to capture audio, images, and motions, respectively. The microphone 101, the camera 103, and the motion sensor 105 may be positioned on the media content terminal device 155 and oriented to capture the audio, images, and motions, respectively. The media content terminal device 155 may orient the camera 103 and the motion sensor 105 to face towards an area where the user is likely to be consuming the media content. For instance, the camera 103 and the motion sensor 105 may face in the same direction as a display (or screen) to capture images or motions of users within the viewing periphery of the display. In other embodiments, the microphone 101, the camera 103, the motion sensor 105, or any combination thereof, may be separate from the media content terminal device 155, or positioned proximate to, or with the same room as or within a radius of, the media content terminal device 155. When separate from the media content terminal device 155, the microphone 101, the camera 103, the motion sensor 105 may be connected by wire or wirelessly with the media content terminal device 155.

The media content player 107 may provide the media content to be played on the media content terminal device 155. Examples of a media content player 107 may include a standalone media content player that is separate from the media content terminal device 155, such as DVD player, gaming console, etc. Other examples of a media content player 107 may include a set-top box, such as a cable network subscriber box, an online streaming media subscriber box, digital video recorder, etc.

In an embodiment, the media content player 107 may include a set top box that receives streaming media content from one or more servers of a content provider. The set top box may be communicatively coupled to the media content terminal device 155 and provide the streaming media content for play on the media content terminal device 155.

In an embodiment, the media content player 107 may include a standalone media content player that receives the media content from a media content storage device, such as a DVD-ROM, external hard drive, memory stick or card, etc. The standalone media content player may be communicatively coupled to the media content terminal device 155 and provide the media content for play on the media content terminal device 155.

In an embodiment, the media content player 107 may be integrated with the media content terminal device 155. For example, the media content terminal device 155 may include circuitry to receive the media content from a media content source

(e.g., one or more servers of a content provider, media content storage device) and to play the media content on the media content terminal device 155.

In certain embodiments, the media content player 107 may receive streaming media content from one or more servers of a content provider and may also receive media content from a media content storage device. It should also be appreciated that in certain embodiments the media content player 107 may also include internal memory (e.g., Flash memory, internal hard drive, etc.) that may be used to store various media content on the media content player 107 and enable play from the internal memory of the media content player 107.

The media content analysis module 108 may analyze the media content and its metadata to provide information about the media content. Any variety of information may be provided, such as the identification of a genre of the media content (e.g., comedy, drama, action, thriller, etc.), a specific scene in the media content, actors or actresses in the media content or specific scene of the media content, a theme of a scene (e.g., action, violence, beautiful scenery, horror, comedy, etc.), or any other information related to a part of the media content or to the media content as a whole. The information about the media content may include a marker, timestamp, frame count, or other means to associate the information with a corresponding portion or entirety of the media content.

The media content analysis module 108 may identify parts of the media content (e.g., a scene or chapter in a movie) that correspond in time with the user's personal states. For instance, a user's personal state may be associated with a specific scene in a movie. More granular information about the media content also may be gathered by the media content analysis module 108 to provide a better context or understanding of what the user's personal state is related to. For example, the user's personal state may be associated with (e.g., mapped to) not only a specific part (e.g., scene, episode, one or more video frames, etc.) of the media content, but may also be associated with more granular information such as to a specific actor or actress in a scene, a setting of a scene, a theme of a scene (e.g., action, violence, beautiful scenery, horror, comedy, etc.), etc. For example, granular information may have been previously collected and associated with a corresponding timestamp or marker. The granular information and timestamp may be, for instance, included within the media content or stored on one or more servers of the content provider. When a user's personal state is identified, the timestamp or marker associated with the user's personal state may be used to look up any granular information associated with the same timestamp or marker. In this way, the user's personal state is not limited to being associated with the media content as a whole.

In an embodiment, the media content analysis module 108 may analyze the media content from the media content player 107 to provide the information related to the media content. For instance, specific video frames or scenes of the media content may be analyzed and various entities or features extracted. The media content analysis module 108 may implement one or more scene recognition algorithms that analyze the media content to determine information about the media content, such as actors or actresses that are in an image frame (or set of image frames), the theme of a scene in an image frame (or set of image frames), etc. For example, training data may be collected to generate machine learning models to identify various actors and actresses in media content.

In another embodiment, the media content may have been analyzed prior to the playing of the media content by the user. For example, a media content provider or a media content producer may have analyzed the media content and collected the information related to the media content. In one embodiment, the information related to the media content may be included with the media content. For example, the information related to the media content may be included with the streaming content, or stored on the media content storage device with the media content. The media content analysis module 108 may then, for example, extract and identify the information related to the media content from the media content.

The media content analysis module 108 may analyze the user's actions with respect to playing the media content, such as whether the user plays, pauses, rewinds, fast forwards, etc., the media content. In such case, the media content analysis module 108 may serve as a sensor that captures data indicative of the user's action with respect to playing the media content. These user actions may indicate a user's personal state with respect to the media content as a whole, to a part of the media content, or to more granular information of the media content.

For example, if a user replays a scene of a movie more than once, this may indicate that the user enjoys that scene of the movie or some more granular information about that scene of the media content. For instance, a user may replay a scene in a movie multiple times because the user likes the type of scene (e.g., comedy scene), the specific actor in the scene, dialogue of the scene, etc. On the other hand, if a user fast forwards or skips parts of the media content, this may indicate that the user dislikes or has little interest in those parts of the media content that were skipped. For example, a user may dislike watching violent or gruesome scenes and may fast forward through those scenes in the media content.

In an embodiment, the media content analysis module 108 may be implemented in the media content player 107. In another embodiment, the media content analysis module 108 may be implemented at one or more servers of a content provider.

Sensors other than a microphone, camera, and motion sensor may be implemented in other embodiments. For example, in an embodiment, a user input device may be implemented as a sensor that receives physical user input from the user and generates sensor data. For example, the user input device may include a button that the user manually presses to provide user feedback, such as the user's approval or disapproval of the media content. The user input device may be more complex (e.g., include additional buttons for other personal states of the user) in other embodiments. For example, the user input device may be any system that receives user inputs directly or indirectly reflecting user feedback, such as a computer, panel, touchscreen, etc. The user input device may be communicatively coupled to a corresponding analysis module which detects when the user presses a button or otherwise provides feedback. In an embodiment, the user input device may be communicatively coupled to the media content analysis module 108, which detects when the user provides user feedback and maps the user feedback to more granular information about the media content.

In an embodiment, a user's actions on a client device (e.g., laptop, tablet, smartphone, etc.) while the media content is being played may be analyzed to determine a user's personal state. The media content analysis module 108 (or other analysis module) may be communicatively coupled to the client device either directly or through a network. In such case, the media content analysis module 108 may serve as a sensor that captures data indicative of the user's action on the client device. The user's actions on the client device may indicate the user's personal state, such as whether the user is paying attention to the media content that is being played. If the user is preoccupied with performing an activity on the client device, such as browsing the internet, playing a game, watching another video online, reading an article, etc., then it may be determined that the user has a low level of interest in the media content. In some instances, the user's action on the client device may relate to the media content being consumed by the user, such as browsing contents or websites related to the media content, sharing comments about the media content on a social network, etc. These user activities may be analyzed to determine the user's personal state with respect to the media content. For example, user comments shared on a social network may be analyzed to determine whether the user is writing something positive (e.g., "awesome", "fantastic", "great acting") or negative (e.g., "terrible", "boring", "bad acting") about the media content. The comments may also be analyzed to reveal if the user writes positive or negative comments about a specific actor or actress, scene, director, etc.

The user feedback system 100 may include a user profile module 115 that maps users' personal states to their user profiles. Each user profile may be matched to a user ID associated with a particular user. The user profile module 115 may include, for example, a database that stores user profile information. Various personal states of a user may be mapped to the user profile for the user. The user's personal states may be associated with additional information about the media content and stored by the user profile module 115. In an embodiment, the association of the user with the user ID and related user profile may be encrypted for privacy reasons. While user feedback may still be collected and analyzed on an individual basis, the user feedback may be anonymized to protect the individual users' privacy.

User characteristics with respect to various media content may be determined based on the user's personal states. The user's personal states with respect to the media content may be determined based on the sensor data. The user's personal states may be determined by the audio analysis module 102, the image analysis module 104, or the motion analysis module 106. The user's personal state may include, for example, the user's emotions, feelings, mood, sentiment, state of attention or interest, state of approval, etc., with respect to the media content. User characteristics may be determined based on the user's personal states and may include, for example, a user's interests, preferences, habits, patterns, etc. For example, historical patterns for a user may be identified to make general determinations as to the user's interests or preferences. These determinations may include, for example, whether the user prefers or enjoys certain genres of media content, specific types of scenes, specific actors or actresses, etc. In an embodiment, the user characteristics are determined by the user profile module 115 based on the user's personal states that are mapped to the user profile. The user profile module 115 may base the user characteristics determination on other factors, such as the user's viewing history or behavior that may be recorded in the user profile module 115. A user's characteristics or personal states, alone or in combination, may constitute user feedback that may be mapped to user profiles and used to provide personalized media content. The user feedback may be collected for individual users. Furthermore, individual user feedback may be collected for a group of users and aggregated to form collective user feedback representing the entire group of users. In an embodiment, the user feedback may be tracked based on user demographics, such as country or region, age, gender, etc. For example, collective user feedback may be obtained and analyzed based on one or more demographics to extract commonalities among users. These commonalities may be useful when providing personalized media content to other users within the same or similar demographics.

The user feedback system 100 may include a media personalization module 116 that may generate, modify, deliver, recommend, or otherwise provide personalized media content to users based on the user feedback, such as one or more users' personal states or characteristics. For example, attributes (or features) of various media content may be compared to a user's interests or preferences to find media content having similar attributes that align with the user's interests or preferences. In this way, media content may be specifically tailored to the user's interests or preferences and recommended for or provided to the user. The attributes of the various media content may be stored in one or more databases. In an embodiment, the attributes of the various media content may be stored in the user profile module 115. The user profile module 115 and the media personalization module 116 may be included in a server 117. The server 117 may include one or more servers of a content provider for example.

The user feedback system 100 may be beneficial for a variety of entities that create, edit, handle, manage, and distribute media content, such as media content providers (e.g., online media content providers that provide streaming movies, streaming music, etc.), media content producers (e.g., producers of movies, advertisements, music, etc.), etc. By providing media content that more accurately align with users' characteristics, the media content providers and media content producers may more effectively provide media content that the user will enjoy. This may result in more user satisfaction and more purchases of media content, resulting in more revenue generated for the media content providers and media content producers.

In an embodiment, the user feedback system 100 may be used with media content that includes advertisements. In this way, the user feedback system 100 may be used to understand the reactions of one or more users to specific advertisements. The user reactions may include, for example, whether users like an advertisement, find an advertisement funny, ignore an advertisement (e.g., leaves the room or fast forwards through the advertisement), inquire about an advertisement, etc. Users may inquire about an advertisement by clicking on an advertisement, searching the web for the corresponding product or service in the advertisement, etc. In an embodiment, the user feedback system 100 may cease the playing or delivery of an advertisement if, for example, the user leaves the room while it is being played or the user feedback system 100 otherwise determines a lack of interest by the user in the advertisement. The user feedback system 100 may deliver more personalized advertisements that a user is more likely to be interested in, need, enjoy, watch, etc. This ability to deliver personalized advertisements may improve an advertisement's effectiveness (e.g., click through and conversion rate), which may eventually generate more revenue. The media content providers may charge advertisers higher rates for having more effective and targeted advertisements, while the advertisers may spend their advertising dollars more efficiently and effectively.

The user feedback system 100 may apply the user feedback (e.g., users' personal states and characteristics) in various ways. The user feedback system 100 may collect user feedback for a specific user in order to personalize content for that specific user. The user feedback system 100 may also collect user feedback for a specific user in order to personalize content for another user with similar characteristics, such as interests or preferences. The user feedback system 100 may also collect and combine user feedback from individual users to form collective user feedback representing the entire group of users. The collective user feedback for the group of users may also be used to personalize media content for the group of users, or for another group of users with similar characteristics. The user feedback system 100 is able to obtain user feedback for a large and comprehensive audience (e.g., all or most users of a content provider's service). Therefore, the user feedback system 100 may learn and make decisions that more accurately represent the interests and preferences of the entire audience. In contrast, traditional user feedback methods that rely on users who actively choose to provide feedback on their own are limited to that small subset of users.

The user feedback may be useful for media content providers or media content producers in a variety of approaches. For example, the user feedback may be used to change the media content itself, such as selecting alternate scenes or an alternate ending, lengthening certain types of scenes, deleting certain types of scenes, etc. Media content that is configurable may be modified according to the user feedback to provide more desirable media content. As another example, the user feedback may be used to change media content services provided to users. Audiences having similar interests or preferences may be provided similar services or products, such as which movie channels are provided, what types of movie channel packages are provided, etc.

In an embodiment, the user feedback system 100 may be implemented in a setting where a group of users are consuming media content together, such as a movie theater. The user feedback may be analyzed on an individual basis or collective basis. The collective user feedback from the group of users may be used to learn and make decisions that may be used to deliver media content to a target audience. For example, the user feedback from the group of users may be used as a training set for a machine learning model, which may then be applied to a target audience. An aggregated weighting and ranking algorithm may be applied to dynamically change the media content in a manner to optimize interest in, or preference for, the media content by most users of the target audience. For instance, an ending to a movie may be selected based on the prediction of what most of the users in the target audience will prefer best. Aggregating user feedback (e.g., via machine learning techniques) may be beneficial in inferring (or predicting) user interests and preferences for other users with no, or little, interests or preferences established.

In an embodiment, the user feedback system 100 may be used as a tool for media content producers. The user feedback obtained from a sample audience of users may be used to make generalizations about a target audience. The user feedback system 100 may assist producers to change (or edit) media content (e.g., films, movie shows, songs, etc.) according to user feedback obtained from the sample audience. For instance, user feedback may be used to identify characteristics (e.g., interests and preferences) of the sample audience, which in turn may enable the media content producer to change the media content accordingly for the target audience. A movie producer may change a film, for example, to have an alternate ending that is predicted to be more appealing to the target audience, or may change a film to tone down a violent scene that is predicted to be too violent for the target audience.

In an embodiment, the changes to the media content (e.g., film) may be performed on the media content during production and prior to the release of the media content. In this way, the film is released with the more desirable changes included. For example, the user feedback system 100 may be implemented to obtain user feedback to a screening (or test viewing) of a film. For instance, the film may be shown to one or more screening audiences to collect user feedback with respect to the test version of the film. The user feedback from the screening audience may be used as a prediction of the interests and preferences of a larger target audience. In this way, the film may be changed accordingly for one or more theater-release versions based on the predicted interests and preferences of the target audience. For example, user feedback from screening audiences in different countries may be used to generate different versions of the film in different countries. Similarly, the film may be changed to create various DVD versions of the film based on user feedback derived from the screenings, the theater film releases, or both. The media content producers may create multiple versions of the media content according to the interests and preferences of a number of different target audiences, such as audiences from different countries, ages, gender, or other demographics.

In an embodiment, the user feedback system 100 may be used to dynamically change the media content on the fly based on user feedback obtained while the media content is being played. This may occur in real time (or approximately real time). In this way, for example, a film may be changed on the fly to dynamically adjust scenes, stories, ending, etc., according to the user feedback obtained while the users are consuming the media content.

In an embodiment, the media content may be dynamically changed based on previously obtained user feedback, such as historical user feedback. For example, if the user has historically preferred action scenes, then the media content may be changed to include longer or more action scenes. Media content providers, for instance, may change the media content based on the user feedback in order to improve the user experience. The changes may, for example, be incorporated by establishing a preconfigured rules engine or by machine learning.

The user feedback system 100 may provide spontaneous user feedback that is associated with the user's personal state while the media content is being consumed. This user feedback is the natural response from the user, which may closely represent the user's true feelings at the time the user consumes the media content. Thus, the user feedback system 100 is not improperly influenced by a user's after thoughts, which occur subsequent to the consumption of the media content and which may change over time.

The user feedback system 100 may not detrimentally impact user experience in consuming media content. For example, the user feedback system 100 may continuously and nonintrusively operate in the background. Furthermore, the user feedback system 100 may be automatic and not require the user to do anything special or provide any extra effort. For instance, the user does not need to stop watching the media content or otherwise direct the user's focus away from the media content (e.g., by affirmatively and deliberately providing user feedback commands) to provide user feedback.

The embodiment shown in FIGURE 1A is not intended to be limiting. Other configurations may be implemented in other embodiments. For example,

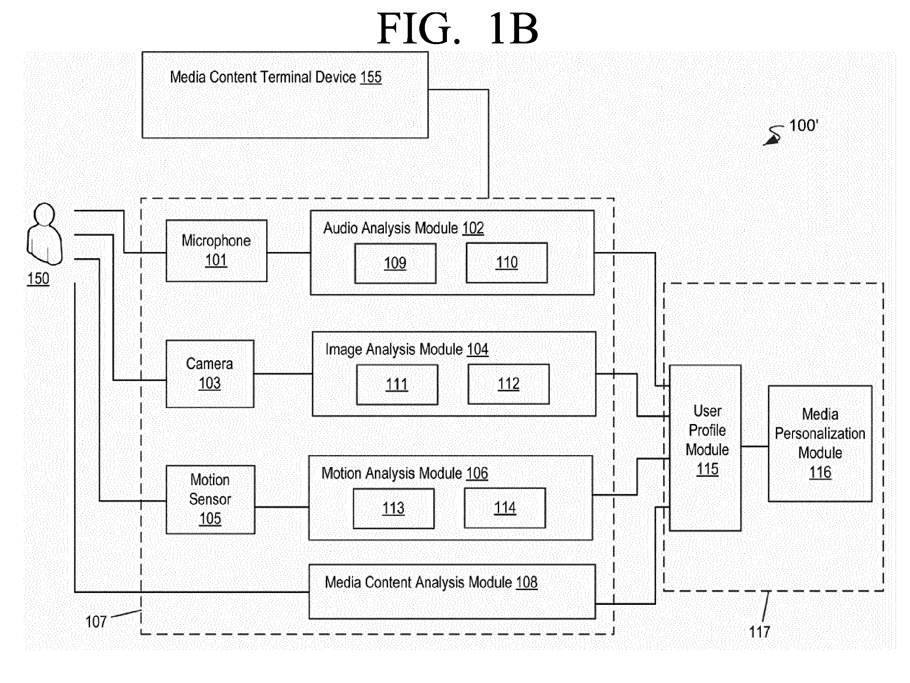

**FIGURE 1B** illustrates a block diagram of a user feedback system 100', according to another embodiment. In the user feedback system 100' shown in FIGURE 1B, the microphone 101, the audio analysis module 102, the camera 103, the image analysis module 104, the motion sensor 105, and the motion analysis module 106 are included in the media content player 107. The media content player 107 may be communicatively coupled to the media content terminal device 155 and provide the media content to the media content terminal device 155 for presentation to the user. For example, the media content player 107 may be a set top box that communicatively couples to a smart TV to provide streaming media to the smart TV. The common components shown in the user feedback system 100 of FIGURE 1A and the user feedback system 100' of FIGURE 1B may operate in a similar manner. The discussion herein for the user feedback system 100 of FIGURE 1A may also apply to the user feedback system 100' of FIGURE 1B. For the sake of brevity and clarity, the features and functions of the common components described for the user feedback system 100 of FIGURE 1A are not repeated here.

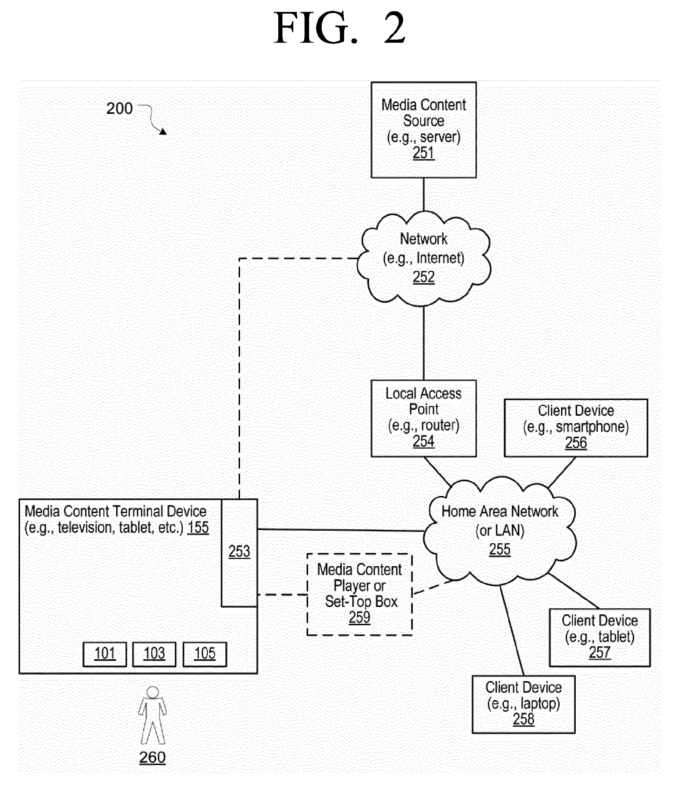

**FIGURE 2** illustrates a block diagram of an example user feedback system 200, according to an embodiment. The user feedback system 200 is shown including the media content terminal device 155 (e.g., smart TV, tablet, smartphone, gaming device, etc.). The media content terminal device 155 includes the microphone 101, the camera 103, and the motion sensor 105.

The media content terminal device 155 may include a communication unit 253 (e.g., wired or wireless transceiver) that couples the media content terminal device 155 to a local access point 254 (e.g., router) through a home area network (or LAN) 255. The media content terminal device 155 may be communicatively coupled to a media content source 251 (e.g., one or more servers) via the home area network (or LAN) 255 and network 252 (e.g., the Internet). The media content terminal device 155 may, for example, receive streaming media content from the media content source 251. In an embodiment, the media content terminal device 155 may include an integrated media content player, such as an integrated streaming media player.

In an embodiment, the communication unit 253 may communicatively couple the media content terminal device 155 directly to the network 252, as represented by the dotted line from the communication unit 253 to the network 252. In an embodiment, the communication unit 253 may communicatively couple the media content terminal device 155 to a media content player or set-top box 259 (e.g., DVD player, cable network subscriber box, online streaming media subscriber box, gaming console, etc.), as represented by a dotted box. The media content player or set-top box 259 may be communicatively coupled to the home area network (or LAN) 255, as represented by the dotted line from the media content player or set-top box 259 to the home area network (or LAN) 255.

Various client devices (e.g., smartphone 256, a tablet 257, and a laptop 258) may be communicatively coupled to the media content terminal device 155 and to the media content source 251 via the home area network (or LAN) 255. The discussion regarding the client device described for FIGURE 1A may apply to one or more of the client devices 256-258. For example, user actions on the client devices 256-258 may be detected while the user is consuming media content on the media content terminal device 155. It should be appreciated that in other embodiments, one or more of the client devices 256-258 may not be part of the home area network (or LAN) 255, and instead may be communicatively coupled to the media content terminal device 155 or the server 251 via the network 252.

In an embodiment, one or more of the client devices 256-258 may also include a microphone, camera, and motion sensor and operate in a manner similar to media content terminal device 155 to provide the media content to users 260 and to capture sensor data as similarly described for media content terminal device 155.

In other embodiments, the microphone 101, the camera 103, the motion sensor 105, or any combination thereof, may not be integrated in the media content terminal device 155, but rather communicatively coupled either wired or wirelessly to the media content terminal device 155. For example, the microphone 101, the camera 103, and the motion sensor 105 may be oriented proximate to the media content terminal device 155, or within the same room as the media content terminal device 155. In an embodiment, at least one of the microphone 101, the camera 103, and the motion sensor 105 may be integrated within the media content player or set-top box 259.

The audio analysis module 102, the image analysis module 104, the motion analysis module 106, the media content analysis module 108, the user profile module 115, and the media personalization module 116 may each be implemented in one or more of the media content terminal device 155, the media content player or set-top box 259, the client devices 256-258, and the server 251. It should be appreciated that various permutations may be implemented in different embodiments.

In certain embodiments, the audio analysis module 102, the image analysis module 104, and the motion analysis module 106 may each be implemented within the media content terminal device 155 and the media content player or set-top box 259. In an embodiment, the audio analysis module 102, the image analysis module 104, and the motion analysis module 106 may be implemented within the media content terminal device 155 alone.

In certain embodiments, the user profile module 115 may be implemented in the media content terminal device 155, the media content player or set-top box 259, and the server 251. In an embodiment, the user profile module 115 may be implemented in the server 251 alone.

In certain embodiments, the media content analysis module 108 may be implemented in the media content terminal device 155, the media content player or set-top box 259, and the server 251. In an embodiment, the media content analysis module 108 may be implemented in the media content terminal device 155 alone.

In certain embodiments, the media personalization module 116 may be implemented in the media content player or set-top box 259, and the server 251. In an embodiment, the media personalization module 116 may be implemented in the server 251 alone.

In certain embodiments, the real-time analysis of user feedback may be implemented on the front end, such as on the media content terminal device 155, the media content player or set-top box 259, or combination thereof. In an embodiment, more extensive analysis or computations related to larger amounts of data (e.g., the analysis of the collective user feedback for a large audience of users) may be performed on the back end, such as on the server 251. It should be appreciated that these configurations are exemplary and that other configurations may be implemented in other embodiments.

In an embodiment, the user feedback system 200 may be implemented in a theater setting. In such case, for example, the media content terminal device 155 may include the theater screen and speakers. The microphone 101, the camera 103, and the motion sensor 105 described herein may be positioned at various points within the theater. The microphone 101, the camera 103, and the motion sensor 105 may capture sensor data and provide it to the set top box 259 that includes the audio analysis module 102, the image analysis module 104, and the motion analysis module 106. In such case, for example, a film projector may operate as the media content player while the set top box 259 collects the sensor data. User feedback based on the sensor data may then be sent to the server 251 (e.g., of a film company or producer). The server 251 may, for instance, include the media content analysis module 108, the user profile module 115, and the media personalization module 116. It should be appreciated that this configuration is exemplary, and that other configurations may be implemented in other embodiments.

It should be appreciated that the user feedback system 200 shown in FIGURE 2 is exemplary and that other configurations may be implemented in other embodiments. For example, in another embodiment, one or more components (e.g., microphone, camera, or motion detector) of the user feedback system 200 shown in FIGURE 2 may not necessarily be included, or the network configuration may vary. Furthermore, additional components not shown in FIGURE 2 may also be included in other embodiments, such as additional servers, client devices, networks, etc. It should also be appreciated that the discussion herein for the user feedback system 100 of FIGURE 1A may also apply to the discussion of the user feedback system 200 of FIGURE 2. All references herein to FIGURE 1A may apply equally to FIGURE 1B, as appropriate.

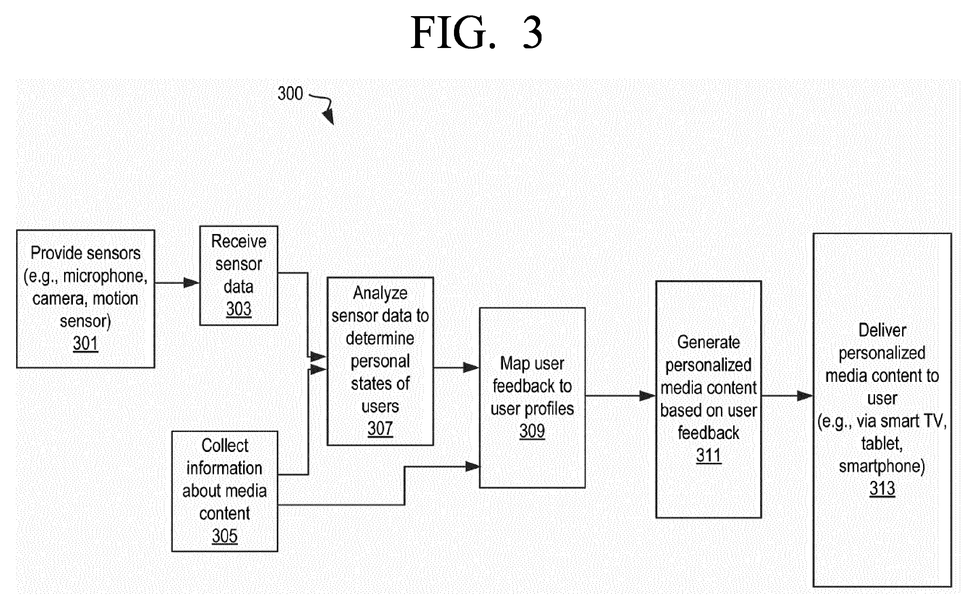

**FIGURE 3** illustrates a flowchart for an example method 300 of obtaining user feedback, according to an embodiment. It should be appreciated that the discussion above for FIGURES 1A-2 may also apply to the discussion of FIGURE 3. For the sake of brevity and clarity, every feature and function applicable to FIGURE 3 is not repeated here.

At block 301 of the method 300, various sensors are provided to capture audio, images, and motion while media content is being played on a media content terminal device. The microphone 101, the camera 103, the motion sensor 105 may be provided proximate to or in the same room as the media content terminal device 155. It should be appreciated that in other embodiments, one or more these sensors may not be included.

Other sensors may be implemented in other embodiments. For example, the media content analysis module 108 may operate as a sensor that monitors the user's actions associated with the playing of the media content, as discussed herein. The client devices 256-258 may operate as sensors that monitor the user's activity on the client devices 256-258, as discussed herein.

At block 303, sensor data from the sensors provided at block 301 may be received. In an embodiment, audio data, image data, and motion data may be received by the audio analysis module 102, the image analysis module 104, and the motion analysis module 106 of FIGURE 1A, respectively.

Data related to the user's actions associated with the playing of the media content (e.g., rewinding to replay scenes, fast forwarding to skip scenes, pausing, etc.), or the user's activity on a client device (e.g., reading unrelated content on the web, commenting on the media content online, etc.), may also be received. In an embodiment, the data related to the user's actions associated with the playing of the media content, or the user's activity on a client device, may be received by the media content analysis module 108 of FIGURE 1A.

At block 305, information about the media content may be collected. The information about media content may include any variety of information about the media content as a whole, specific parts of the media content, or more granular information related to the media content, such as genre of the media content, themes of a scene, actors and actresses in a scene, etc. The media content may be analyzed (e.g., while the media content is being played) to determine information about the media content. In an embodiment, the information about the media content may be obtained from a database, or from metadata that is included with the media content. In an embodiment, block 305 may be performed by the media content analysis module 108 of FIGURE 1A.

At block 307, the sensor data received at block 303 may be analyzed to determine personal states of one or more users with respect to the media content. For example, audio data may be analyzed for audible cues (e.g., sounds or speech) that may indicate the user's personal state with respect to the media content. In an embodiment, the audio data may be received and analyzed by the audio analysis module 102 as described in FIGURE 1A.

Image data may be analyzed to determine a user's personal state with respect to the media content. For example, facial features may indicate a user's emotion, such as whether the user is excited, horrified, scared, sad, angry, etc. The images may be analyzed for user actions (e.g., gestures, posture, activity, etc.), which may indicate the user's personal state. For example, a user's presence may indicate a user's interest level in the media content. In an embodiment, the image data may be received and analyzed by the image analysis module 104 as described in FIGURE 1A.

Motion data may be analyzed to determine a user's personal state with respect to the media content. For example, user motions may be analyzed for actions (e.g., gestures, postures, activities) performed by the user, which may indicate the user's level of interest in the media content, approval of the media content, emotions related to the media content, etc. In an embodiment, the motion data may be received and analyzed by the motion analysis module 106 as described in FIGURE 1A.

User actions associated with the playing of the media content (e.g., repeated viewing, pausing, fast forwarding through scenes, etc.) may be analyzed to determine a user's personal state with respect to the media content, as represented by the arrow from block 305 to block 307. In an embodiment, the user actions associated with the playing of the media content may be analyzed by the media content analysis module 108 as described in FIGURE 1A.

User actions on other client devices or services while the user is consuming the media content may be analyzed to determine a user's personal state with respect to the media content, as represented by the arrow from block 305 to block 307. In an embodiment, the user actions on other client devices or services may be analyzed by the media content analysis module 108 as described in FIGURE 1A.

Information about the media content may also be provided to add more granular detail to the user's personal states, as represented by the arrow from block 305 to block 307. For example, when a user's personal state is determined, it may be associated with the corresponding scene in which it occurred, to the actors or actresses within the scene, the genre of the media content as a whole, etc.

At block 309, user feedback may be mapped to the user profiles for the corresponding users that provided the user feedback. The user's personal states from block 307 may be mapped to the user profiles for the corresponding users. The user's personal states may be analyzed to determine user characteristics (e.g., user's interests, preferences, habits, patterns) with respect to media content in general, which may constitute additional user feedback to be mapped to the user profiles. The user feedback may be mapped with the associated information related to the media content obtained at block 305, as represented by the arrow from block 305 to block 309. These mappings may, for example, be stored in a database. In an embodiment, block 309 may be performed by the user profile module 115 of FIGURE 1A.

At block 311, personalized media content may be generated for a user based on the user feedback. For example, attributes (or features) of various media content may be compared to a user's interests and preferences to find media content having similar attributes that align with the user's interests and preferences. In this way, media content may be specifically tailored to the user's interests and preferences and provided to the user. The attributes of the various media content may be stored in one or more databases.

The user feedback for a specific user may be used to personalize content for that specific user. User feedback for a specific user may be used to personalize content for another user with similar characteristics. User feedback from individual users may form collective user feedback representing an entire group of users. The collective user feedback for the group of users may be used to personalize content for the group of users, or for another group of users with similar characteristics.

In an embodiment, the user feedback may be used by media content providers or media content producers in different manners to provide more personalized media content. For example, the user feedback may be used to change the media content itself, such as selecting an alternate ending, modifying or deleting scenes, etc. In an embodiment, block 311 may be performed by the media personalization module 116 of FIGURE 1A.

At block 313, the personalized media content is delivered to the user. For example, the users may subscribe to a media service that supplies media content to the users via a set-top box (e.g., cable network subscriber box, online streaming media subscriber box), desktop or mobile application or software, a website, etc. The media service may include a user interface that is displayed on the user's media content terminal device, such as smart TV, tablet, and smartphone. The user interface may provide the delivery of personalized media content to the user.

The personalized media content may be delivered in the form of revised media content. For example, the media content provider or media content producer may change media content based on the user feedback in order to improve user experience.

The personalized media content may be delivered to the user in the form of recommended media content specific to a user. For example, recommendations of personalized media content may be displayed on a user interface of a media content terminal device to the user. For example, the user interface may enable the user to browse the recommended media content and select or purchase any of the recommendations. Recommended media content may include movies, TV shows, live TV, sporting events, music, books, games, etc. In an embodiment, the delivery of personalized media content based on user feedback may also include media content such as advertisements.

In an embodiment, block 313 may be performed by the media content player 107 of FIGURE 1A, the media content player or set-top box 259 of FIGURE 2, the media content terminal device 155 of FIGURE 1A, the media content source 251, or combination thereof.

In an embodiment, the method 300 may be performed in real time to dynamically change the media content based on user feedback while one or more users are consuming the media content. For example, user feedback may be collected in real time while the users are consuming the media content. The media content being consumed by the users may then be changed on the fly to dynamically adjust scenes, stories, ending, etc., according to the user feedback.

### HARDWARE IMPLEMENTATION

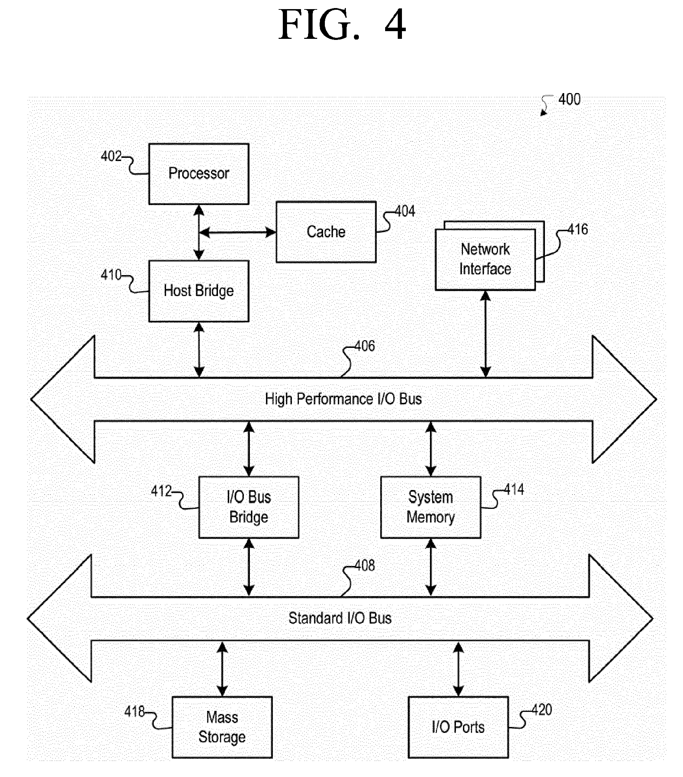

The foregoing processes and features can be implemented by a wide variety of machine and computer system architectures and in a wide variety of network and computing environments. **FIGURE 4** illustrates an example of a computer system 400 that may be used to implement one or more of the embodiments described herein in accordance with an embodiment of the invention. The computer system 400 includes sets of instructions for causing the computer system 400 to perform the processes and features discussed herein. The computer system 400 may be connected (e.g., networked) to other machines. In a networked deployment, the computer system 400 may operate in the capacity of a server machine or a client machine in a client-server network environment, or as a peer machine in a peer-to-peer (or distributed) network environment. In an embodiment of the invention, the computer system 400 may be a component of the networking system described herein. In an embodiment of the present disclosure, the computer system 400 may be one server among many that constitutes all or part of a networking system.

In an embodiment, the client system 400 may be implemented as the media content terminal device 155, the client devices 256-258, the server 251, or the media content player or set-top box 259 of FIGURES 1A-3.

The computer system 400 includes a processor 402, a cache 404, and one or more executable modules and drivers, stored on a computer-readable medium, directed to the processes and features described herein. Additionally, the computer system 400 may include a high performance input/output (I/O) bus 406 or a standard I/O bus 408. A host bridge 410 couples processor 402 to high performance I/O bus 406, whereas I/O bus bridge 412 couples the two buses 406 and 408 to each other. A system memory 414 and one or more network interfaces 416 couple to high performance I/O bus 406. The computer system 400 may further include video memory and a display device coupled to the video memory (not shown). Mass storage 418 and I/O ports 420 couple to the standard I/O bus 408. The computer system 400 may optionally include a keyboard and pointing device, a display device, or other input/output devices (not shown) coupled to the standard I/O bus 408. Collectively, these elements are intended to represent a broad category of computer hardware systems, including but not limited to computer systems based on the x86-compatible processors manufactured by Intel Corporation of Santa Clara, California, and the x86-compatible processors manufactured by Advanced Micro Devices (AMD), Inc., of Sunnyvale, California, as well as any other suitable processor.

An operating system manages and controls the operation of the computer system 400, including the input and output of data to and from software applications (not shown). The operating system provides an interface between the software applications being executed on the system and the hardware components of the system. Any suitable operating system may be used, such as the LINUX Operating System, the Apple Macintosh Operating System, available from Apple Computer Inc. of Cupertino, Calif., UNIX operating systems, Microsoft® Windows® operating systems, BSD operating systems, and the like. Other implementations are possible.

The elements of the computer system 400 are described in greater detail below. In particular, the network interface 416 provides communication between the computer system 400 and any of a wide range of networks, such as an Ethernet (e.g., IEEE 802.3) network, a backplane, etc. The mass storage 418 provides permanent storage for the data and programming instructions to perform the above-described processes and features implemented by the respective computing systems identified above, whereas the system memory 414 (e.g., DRAM) provides temporary storage for the data and programming instructions when executed by the processor 402. The I/O ports 420 may be one or more serial and/or parallel communication ports that provide communication between additional peripheral devices, which may be coupled to the computer system 400.

The computer system 400 may include a variety of system architectures, and various components of the computer system 400 may be rearranged. For example, the cache 404 may be on-chip with processor 402. Alternatively, the cache 404 and the processor 402 may be packed together as a "processor module", with processor 402 being referred to as the "processor core". Furthermore, certain embodiments of the invention may neither require nor include all of the above components. For example, peripheral devices coupled to the standard I/O bus 408 may couple to the high performance I/O bus 406. In addition, in some embodiments, only a single bus may exist, with the components of the computer system 400 being coupled to the single bus. Furthermore, the computer system 400 may include additional components, such as additional processors, storage devices, or memories.

In general, the processes and features described herein may be implemented as part of an operating system or a specific application, component, program, object, module, or series of instructions referred to as "programs". For example, one or more programs may be used to execute specific processes described herein. The programs typically comprise one or more instructions in various memory and storage devices in the computer system 400 that, when read and executed by one or more processors, cause the computer system 400 to perform operations to execute the processes and features described herein. The processes and features described herein may be implemented in software, firmware, hardware (e.g., an application specific integrated circuit), or any combination thereof.

In one implementation, the processes and features described herein are implemented as a series of executable modules run by the computer system 400, individually or collectively in a distributed computing environment. The foregoing modules may be realized by hardware, executable modules stored on a computer-readable medium (or machine-readable medium), or a combination of both. For example, the modules may comprise a plurality or series of instructions to be executed by a processor in a hardware system, such as the processor 402. Initially, the series of instructions may be stored on a storage device, such as the mass storage 418. However, the series of instructions can be stored on any suitable computer readable storage medium. Furthermore, the series of instructions need not be stored locally, and could be received from a remote storage device, such as a server on a network, via the network interface 416. The instructions are copied from the storage device, such as the mass storage 418, into the system memory 414 and then accessed and executed by the processor 402. In various implementations, a module or modules can be executed by a processor or multiple processors in one or multiple locations, such as multiple servers in a parallel processing environment.

Examples of computer-readable media include, but are not limited to, recordable type media such as volatile and non-volatile memory devices; solid state memories; floppy and other removable disks; hard disk drives; magnetic media; optical disks (e.g., Compact Disk Read-Only Memory (CD ROMS), Digital Versatile Disks (DVDs)); other similar non-transitory (or transitory), tangible (or non-tangible) storage medium; or any type of medium suitable for storing, encoding, or carrying a series of instructions for execution by the computer system 400 to perform any one or more of the processes and features described herein.

For purposes of explanation, numerous specific details are set forth in order to provide a thorough understanding of the description. It will be apparent, however, to one skilled in the art that embodiments of the disclosure can be practiced without these specific details. In some instances, modules, structures, processes, features, and devices are shown in block diagram form in order to avoid obscuring the description. In other instances, functional block diagrams and flow diagrams are shown to represent data and logic flows. The components of block diagrams and flow diagrams (e.g., modules, blocks, structures, devices, features, etc.) may be variously combined, separated, removed, reordered, and replaced in a manner other than as expressly described and depicted herein.

Reference in this specification to "one embodiment", "an embodiment", "other embodiments", "one series of embodiments", "some embodiments", "various embodiments", or the like means that a particular feature, design, structure, or characteristic described in connection with the embodiment is included in at least one embodiment of the disclosure. The appearances of, for example, the phrase "in one embodiment" or "in an embodiment" in various places in the specification are not necessarily all referring to the same embodiment, nor are separate or alternative embodiments mutually exclusive of other embodiments. Moreover, whether or not there is express reference to an "embodiment" or the like, various features are described, which may be variously combined and included in some embodiments, but also variously omitted in other embodiments. Similarly, various features are described that may be preferences or requirements for some embodiments, but not other embodiments.

The language used herein has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

## Claims

1. A system obtaining user feedback on media content, comprising:
at least one processor configured to process user feedback on media content; and
a storage configured to store at least one of a control instruction related to the at least one processor and data;
wherein the at least one processor receives sensor data including motion data which is captured by a motion sensor, while media content is played at a media content terminal apparatus, and determines, after analyzing the received sensor data including the motion data which reflects a personal state of the user on the media content, the personal state of the user on the media content based on a result of the motion data analysis.

2. The system as claimed in claim 1, wherein the personal state of the user is associated with user attention on activities other than watching or listening activity of the media content.

3. The system as claimed in one of claim 1 or claim 2, wherein the personal state of the user is associated with user emotion in response to the media content.

4. The system as claimed in one of claim 1 to claim 3, wherein the sensor data further comprises image data captured by a camera,
wherein the at least one processor determines the personal state of the user based on the image data.

5. The system as claimed in one of claim 1 to claim 4, wherein the sensor data further comprises audio data captured by a microphone,
wherein the at least one process determines the personal state of the user based on the audio data.

6. The system as claimed in one of claim 1 to claim 5, wherein the at least one processor provides the user with personalized media content which is generated based on the personal state of the user.

7. The system as claimed in claim 6, wherein the providing personalized media content comprises changing the media content while the media content is being played.

8. The system as claimed in claim 6, wherein the providing personalized media content comprises changing the media content for a target audience based on a personal state of users separate from the target audience.

9. The system as claimed in one of claim 1 to claim 8, wherein the at least one processor to perform:
identifying a part of the media content which corresponds to a personal state of the user which occurs while the media content is watched or listened to, and
mapping the part of the media content to the personal state of the user.

10. The system as claimed in claim 9, wherein the identifying the part of the media content and the mapping the part of the media content are performed in real time while the media content is watched or listened to.

11. A method for obtaining user feedback on media content, comprising:
receiving sensor data including motion data captured by a motion sensor while media content is played on a media content terminal device;
analyzing the received sensor data including the motion data which reflects a personal state of the user on the media content; and
determining a personal state of the user on the media content based on a result of the motion data analysis.

12. The method as claimed in claim 11, wherein the personal state of the user is associated with user attention on activities other than watching or listening activity of the media content.

13. The method as claimed in one of claim 11 and claim 12, wherein the personal state of the user is associated with user emotion in response to the media content.

14. The method as claimed in one of claim 11 to claim 13, wherein the sensor data further comprises image data captured by a camera,
and the determining comprises determining the personal state of the user based on the image data.

15. The method as claimed in one of claim 11 to claim 14, wherein the sensor data further comprises image data captured by a microphone,
and the determining comprises determining the personal state of the user based on the audio data.
